**Europäisches Patentamt**

**European Patent Office**

**Office européen des brevets**

(19)

(11) Numéro de publication: **0 101 346**
**A2**

## (12) DEMANDE DE BREVET EUROPEEN

(21) Numéro de dépôt: **83401453.2**

(22) Date de dépôt: **13.07.83**

(51) Int. Cl.³: **B 60 K 17/10**
**B 62 D 53/02**

(30) Priorité: **16.07.82 FR 8212440**

(43) Date de publication de la demande:
**22.02.84 Bulletin 84/8**

(84) Etats contractants désignés:
**AT BE CH DE FR GB IT LI LU NL SE**

(71) Demandeur: **A.G.A.N.**
**Zone Industrielle**
**F-31220 Cazeres-sur-Garonne(FR)**

(72) Inventeur: **Albin, Alexis**
**13 rue de Bigorre**
**F-31220 Cazeres-sur-Garonne(FR)**

(74) Mandataire: **Dupuy, Louis et al,**
**CREUSOT-LOIRE 15 rue Pasquier**
**F-75008 Paris(FR)**

(54) **Engin hydraulique.**

(57) La présente invention se rapporte à un engin hydraulique équipé d'un groupe générateur de pression hydraulique
servant à propulser l'engin et à fournir de l'énergie hydraulique à des outils hydrauliques.

L'engin équipé d'un groupe générateur de pression
hydraulique (1) est caractérisé par le fait que ce groupe est
monté sur un véhicule à roues et qu'au moins deux des
roues (3, 4) de ce véhicule sont entraînées chacune par un
moteur hydraulique (5) alimenté par ledit groupe générateur
de pression (1).

Un tel engin est en particulier destiné aux chantiers
mobiles d'entretien des voies ferrées.

Fig·2

EP 0 101 346 A2

## "Engin hydraulique"

La présente invention se rapporte à un engin hydraulique équipé d'un groupe générateur de pression hydraulique servant à propulser l'engin et à fournir de l'énergie hydraulique à des outils hydrauliques. Un tel engin est en particulier destiné aux chantiers mobiles d'entretien des voies ferrées.

Sur les chantiers on utilise des outils à entrainement hydraulique tels que : perceuses, visseuses, tirefonneuses, tronçonneuses, clés à chocs. Ces outils hydrauliques sont alors branchés sur un groupe générateur de pression hydraulique qui doit généralement être déplacé pour suivre le chantier. Les générateurs connus se prêtent mal aux déplacements.

La présente invention se rapporte à un engin équipé d'un groupe générateur de pression hydraulique qui est auto moteur, le groupe servant à la fois à propulser l'engin et à fournir l'énergie hydraulique aux outils. Cet engin est pourvu de roues entrainées par des moteurs hydrauliques qui procurent un couple important ce qui permet le franchissement aisé des obstacles. L'engin est pourvu d'un système de freinage qui coopère avec les moteurs hydrauliques de manière à contrôler les différences des vitesses de rotation entre les roues (en cas de résistance sur une roue par exemple). Le chassis de l'engin permet aux roues de suivre les mouvements du terrain bien que les moteurs hydrauliques soient montés de manière fixe sur ce chassis.

Conformément à l'invention, l'engin, équipé d'un groupe générateur de pression hydraulique, est essentiellement caractérisé par le fait que ce groupe est monté sur un véhicule à roues et /qu'au moins deux des roues de ce véhicule sont entrainées chacune par un moteur hydraulique alimenté par le dit groupe générateur de pression.

Selon une caractéristique, l'engin comporte des organes de freinage agissant indépendamment sur les roues entrainées par les dits moteurs hydrauliques.

Selon une autre caractéristique, les moteurs sont montés sur le chassis du véhicule qui se compose d'un demi-chassis porté par deux roues et d'un autre demi-châssis porté par deux autres roues, ces deux demi-châssis étant accouplés l'un à l'autre par une articulation centrale permettant la rotation relative des deux demi-châssis autour d'un axe vertical et d'un axe horizontal, des moyens hydrauliques commandant l'orientation relative des deux demi-châssis autour de l'axe vertical.

L'invention va maintenant être décrite avec plus de détails en se référant à un mode de réalisation donné à titre d'exemple et représenté par les dessins annexés.

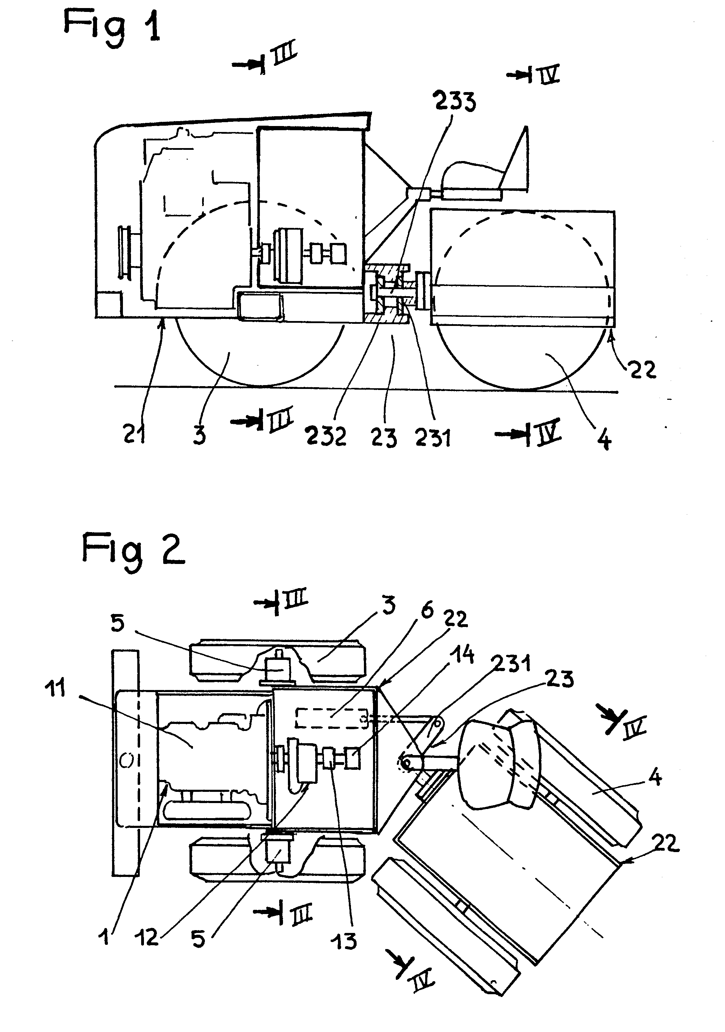

La figure 1 représente une coupe longitudinale de l'engin selon l'invention.

La figure 2 représente une vue de dessus de la figure 1.

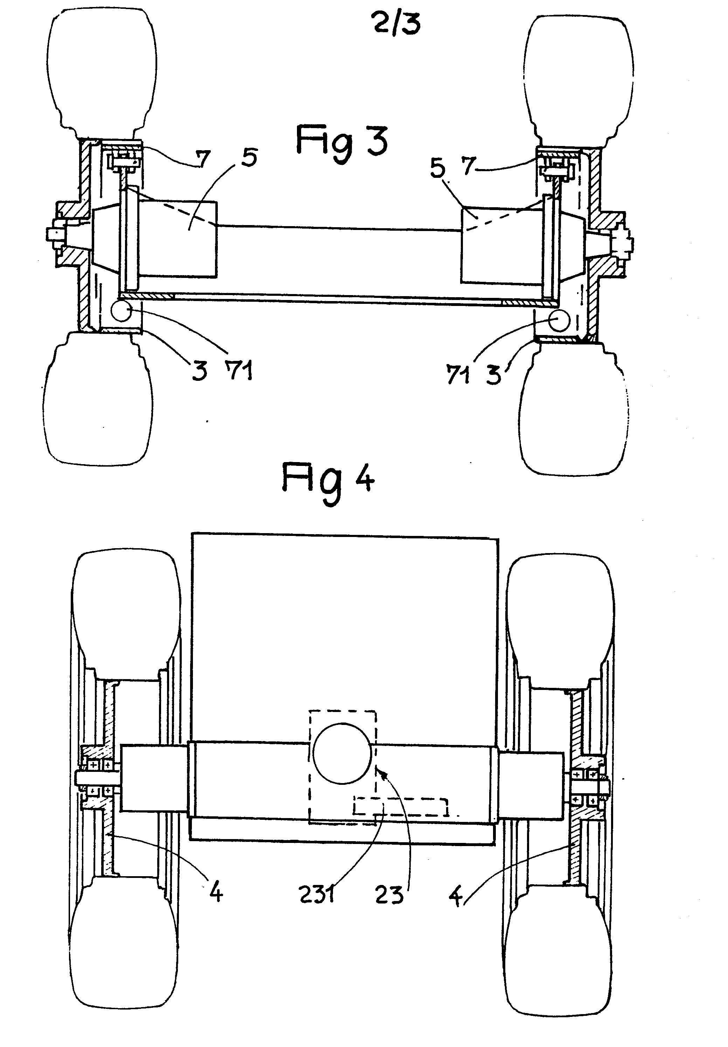

La figure 3 représente une coupe selon III-III des figures 1 et 2.

La figure 4 représente /une coupe selon IV-IV des figures 1 et 2.

La figure 5 représente le schéma hydraulique de l'engin.

En se référant aux figures, l'engin comporte un groupe générateur de pression hydraulique 1 constitué par des pompes 12, 13, 14 entraînées par un moteur thermique 11.

Ce groupe 1 est monté sur un véhicule automoteur comprenant un châssis 2 porté par un train de roues avant 3 et par un train de roues arrière 4. Ces roues peuvent être couplées à des roues ferroviaires, coaxiales, de manière à permettre les déplacements rail-route.

Le châssis se compose d'un demi-châssis 21 porté par les roues 3 et d'un demi-châssis 22 porté par les roues 4. Ces demi-châssis sont accouplés l'un à l'autre par une articulation centrale 23. Le demi-châssis 21 que l'on appelera demi-châssis moteur porte le groupe 1.

Les roues 3 du /demi-châssis porteur sont entraînées directement par des moteurs 5 qui sont accouplés chacun à une roue. Le moyeu de chaque roue est calé sur l'arbre de sortie d'un moteur 5 qui est fixé sur un flasque du demi-châssis.

Les roues arrières 4, non - motrices, sont montées par l'intermédiaire de roulements sur des fusées du demi-châssis 22.

L'articulation centrale 23 est une articulation à chape comportant un levier 231 réuni de manière à pouvoir pivoter autour d'un axe vertical à une fourche 232 solidaire du demi-châssis 21. Ce levier est réuni par une articulation cylindrique /233 à axe horizontal au demi-châssis 22. Cette articulation/permet la rotation relative des deux demi-châssis autour d'un axe vertical et autour d'un axe horizontal par l'axe 233.

L'extrémité du levier 231 est accouplée à la tige d'un vérin de direction 6 dont le cylindre est accouplé par une articulation au demi-châssis 21. Les sorties et les rentrées de la tige de ce vérin déterminent l'orientation relative des deux demi-châssis 21 et 22.

Des freins 7 sont prévus pour freiner les roues motrices 3 indépendamment l'une de l'autre. Ces freins sont du type à machoires, les machoires étant manoeuvrées par des vérins hydrauliques 71. En agissant sur l'un ou l'autre des freins, il est possible de contrôler les différences de rotation des moteurs hydrauliques.

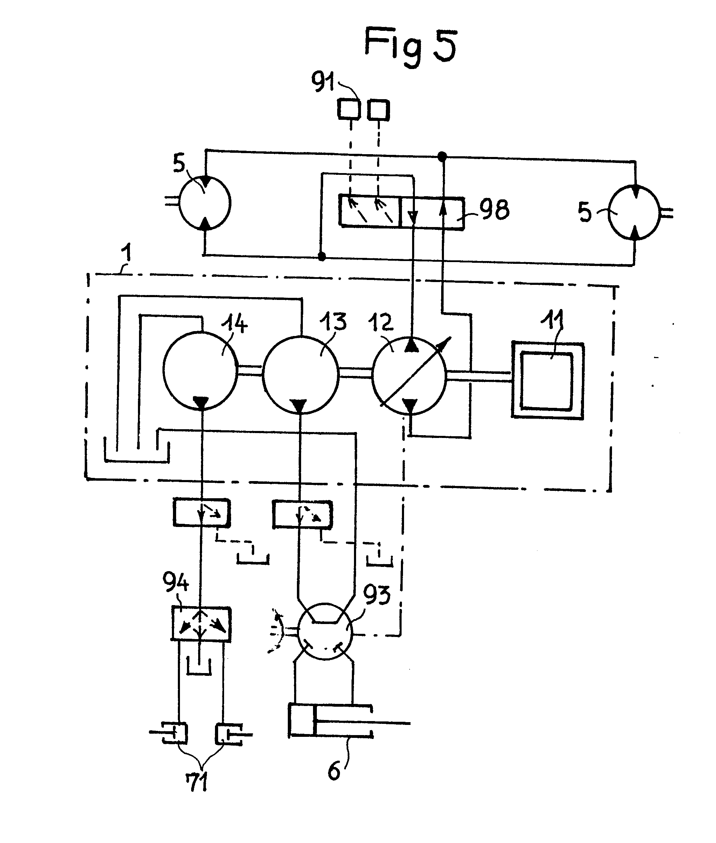

En se référant au schéma hydraulique simplifié de la figure 5, le groupe générateur de pression hydraulique alimente les moteurs hydrauliques 5 et des raccordements 91 sur lesquels des outils hydrauliques peuvent être branchés. Par ailleurs il fournit l'énergie hydraulique aux vérins de freins 71 et pour le contrôle du vérin de direction 6.

Le groupe générateur de pression 1 se compose d'un moteur thermique 11 entrainant une pompe à cylindrée variable 12 et des pompes à cylindrées constantes 13, 14. La pompe à cylindrée variable 12 alimente d'une part les moteurs hydrauliques 5 en parallèle et d'autre part des raccords 91, l'alimentation étant controlée par un distributeur 98 alternativement vers les moteurs ou les raccords.

Le vérin de contrple de direction 6 est alimenté par l'intermédiaire d'un dispositif de 93 à commande manuelle alimenté lui-même par une pompe à direction cylindrée constante 13. Ce dispositif 93 à commande manuelle est manoeuvré par un volant placé sur le tableau de l'engin de manière à pouvoir être manoeuvré par l'opérateur. Ce dispositif 93 est monté sur une glissière du demi-châssis moteur de manière à pouvoir coulisser linéairement en agissant sur le volant. Il est relié au levier de commande de la pompe à cylindrée variable 12 par une transmission mécanique. De cette manière en déplaçant linéairement le dispositif 93 par le volant, l'opérateur controle le débit de la pompe 12.

Chaque vérin de frein 71 peut être alimenté indépendamment par le distributeur 94 alimenté par une pompe 14. La ou les pompes à cylindrées constantes 13, 14 alimentent des raccords non représentés sur lesquels des outils hydrauliques travaillant à vitesse constante peuvent être branchés.

Il est bien entendu que l'on peut sans sortir du cadre de l'invention imaginer des variantes et des pefectionnements de détails et de même envisager l'emploi de moyens équivalents.

Le véhicule pourrait comporter un système permettant de modifier l'écartement des roues.

**0101346**

## REVENDICATIONS

1.- Engin hydraulique comportant un groupe générateur de pression hydraulique (1) monté sur un véhicule à roues dont au moins deux des roues (3,4) sont entrainées chacune par un moteur hydraulique (5) alimenté par ledit groupe générateur de pression( 1), caractérisé par le fait qu'il comporte des organes de freinage (7) agissant indépendamment sur les roues entrainées par les moteurs hydrauliques (5).

2.- Engin selon la revendication 1,

caractérisé par le fait que les moteurs (5) sont montés fixes sur le châssis (2) du véhicule qui se compose d'un demi-châssis (21) porté par deux roues (3) et d'un autre demi-châssis (22) porté par deux autres roues (4), ces deux demi-châssis (21, 22) étant accouplés l'un à l'autre par une articulation centrale (23) permettant la rotation des deux demi-châssis autour d'un axe vertical et d'un axe horizontal, des moyens moteurs (6) commandant l'orientation relative des deux demi-châssis autour de l'axe vertical.

3.- Engin selon la revendication 2,

caractérisé par le fait que l'articulation centrale (23) est constituée par une articulation à chape dont l'un des éléments (232)est solidaire d'un demi-châssis (21) et dont l'autre (231) est réuni par une articulation cylindrique à axe horizontal (233) à l'autre demi-châssis (22).

4.- Engin selon l'une quelconque des revendications précédentes, caractérisé par le fait que le groupe générateur de pression hydraulique alimente des raccords (91) pour des outils hydrauliques.

5.- Engin selon la revendication 2,

caractérisé par le fait que les moyens moteurs sont constitués par un vérin de commande en direction (6) alimenté par un dispositif (93) à commande manuelle relié mécaniquement à la pompe à cylindrée variable (12) et susceptible d'être déplacé de manière à manoeuvrer ladite pompe.

6.- Engin selon l'une quelconque des revendications précédentes, caractérisé par le fait que le groupe générateur de pression (1) comporte une pompe à cylindrée variable (12) alimentant des raccords (91) et les moteurs hydrauliques (5) et au moins une pompe à cylindrée constante (13, 14) alimentant d'autres raccords.

Fig 1

Fig 2

Fig 3

7  5

5  7

3  71

71  3

Fig 4

4

231  23  4

Fig 5